# EUROPEAN PATENT APPLICATION

(11) **EP 4 560 381 A1**
(43) Date of publication of application: **28.05.2025**
(21) Application number: 24207230.4
(22) Date of filing: 17.10.2024
(51) Int. Cl.: G02B 30/00, B60R 1/22

(54) **SYSTEM FOR CAMERA AND HOLOGRAPHIC DISPLAY**

(30) Priority: 24.11.2023 DE 102023132881
(71) Applicant: Motherson Innovations Company Ltd., London EC2N 2AX (GB)
(72) Inventor: DAS, Shuvodeep, 70327 Stuttgart (DE); TISCHLER, Raphael, Schlossmattenstrasse 18 (DE)
(74) Representative: Weber-Bruls, Dorothée

(57) **Abstract**

The present disclosure refers to a display assembly for mounting to a vehicle, comprising: at least one housing (130), at least partly accommodating at least one camera system (220), configured to capture at least one field of view (330a, 330b) around the vehicle, at least one illumination system (210), adapted to project at least one light beam (320a, 320b) along at least one light path, and at least one first sheet (250), positioned within the light path; wherein the light beam creates a visual impression on the first sheet (250), the camera system (220) is adapted to capture the field of view at least partly through the first sheet (250), and the first sheet (250) is adapted to display the visual impression in 3D, in particular comprising a hologram, wherein the visual impression is generated due to diffraction of the light beam on the first sheet (250).

## Description

The present disclosure generally relates to a display assembly for mounting to a vehicle, the use of said display assembly as well as a vehicle with said display assembly.

Use of cameras in vehicles has garnered attention as a potential safety-enhancing measure, and while it offers several advantages, there are also important considerations to address. Advocates argue that requiring cameras in all vehicles could significantly reduce the number of accidents caused by blind spots, especially during parking and reversing requirements. The technology provides drivers with a clear and real-time view of the area behind the vehicle, which can help prevent collisions with pedestrians, cyclists, and obstacles. A holographic display, on the other hand, could provide intuitive navigation instructions, augmented reality overlays for brand or road information, and even warnings about potential hazards.

The integration of a camera and a holographic display holds promise for enhancing the driving experience but may have limitations or present several disadvantages. In the current solutions, the holographic display, intended to provide 3D visualizations, might compete for a driver's attention alongside essential real-time footage, potentially causing distraction and compromising road safety, since active holographic display interferes or even stops the recording of the camera system.

In many solutions, a holographic display projection uses a switchable foil to present three-dimensional visuals. In this application users can witness holographic images that change based on their viewing angle. However, the switchable foil and the camera, placed in the same housing, provides the digital content but does not offer the flexibility to switch between different holographic scenes while capturing the surround images by the camera system.

Additionally, the complexity of working with both systems together could result in higher manufacturing costs and maintenance requirements for vehicles. The reliance on two intricate technologies also increases the risk of technical glitches and system failures, leaving drivers with limited or distorted information when they need it most.

The adjacently placed camera and holographic display could lead to errors and potential misses in both of the systems. The collaboration between a camera and holographic display could introduce issues related to usability, user interface design, and may confuse user experience.

EP 1688308 describes a visual display having indicia or other markings that are visually discernible only when an illumination source of the display is in an illumination state, wherein a mask defines at least a masked portion and an unmasked portion and wherein an unmasked portion transmits more light than the masked portion.

Thus, in the known prior dual camera and illumination systems had a limitation of using one at a time: either the camera can see its field of view or the hologram logo can be displayed. Thus, those solutions do not provide an independent, simultaneous and/or parallel use of the camera and the hologram logo display. In further detrimental prior art solutions, two different devices, one for the camera and one for the hologram logo display, are used to combine the camera and hologram logo display, which are cost intensive, need frequent operation by the driver, interfere each other with e.g. scattered light and have increased manufacturing time.

In view of the aforementioned drawbacks and others inherent in the existing state of the art, there is a need to eliminate the mutual influence and interference of a camera system and a holographic display. It is important to have both of the systems working simultaneously and providing, optionally captured image output of the camera and illuminated hologram logo, output independent from each other at all times. Due to the complex parameters and effort required for the camera and holographic display systems to work, there exists a need for developing a system and method for optimizing a, optionally single assembly system with a, camera and holographic display requiring minimal manual assistance while addressing the variety of issues associated with application, and its components.

It is therefore an object of the present disclosure to provide a system in which a camera and a holographic display can be used independently and simultaneously (at the same time) in one assembly. Such a solution reduces costs, facilitates the use and avoids detrimental interference of the components.

The object may be accomplished according to the present disclosure by the features of the claims, wherein display assembly for mounting to a vehicle, comprising: at least one housing, at least partly accommodating at least one camera system, configured to capture at least one field of view around the vehicle, at least one illumination system, adapted to project at least one light beam along at least one light path, and at least one first sheet, positioned within the light path; wherein the light beam creates a visual impression on the first sheet, the camera system is adapted to capture the field of view at least partly through the first sheet, and the first sheet is adapted to display the visual impression in 3D, in particular comprising a hologram, wherein the visual impression is generated due to diffraction of the light beam on the first sheet.

In another aspect, the illumination system may be adapted to project the light beam on a first side of the first sheet, and/or the camera system may be configured to face in direction of a second side of the first sheet, and/or the illumination system, the camera system, and the first sheet may be operatively coupled to the housing.

According to an embodiment, the first sheet may be adapted to display the visual impression outside the vehicle, and/or the first sheet may comprise at least one optical material, and/or the first sheet may be placed at an angle inside the housing, wherein preferably two opposite ends of the first sheet diagonally connect a top portion and a bottom portion of the housing.

In various embodiment, the field of view and the light beam at least partly may not overlap each other within the housing of the assembly and/or may be independently controlled from each other.

It if further proposed, that the field of view of the camera system may be calibrated beyond the created visual impression on the first sheet.

In another aspect, the first sheet may be adapted to hide at least partly the camera system from a view from the outside of the display assembly, in particular from the outside of the vehicle.

In yet another embodiment the display assembly may further comprise at least one second sheet, coupled to an opening side of the housing and providing a transparent side to the housing, wherein optionally at least partly the displayed visual impression and/or field of view extend through the second sheet.

According to an embodiment, the display assembly may further comprise at least one holographic module that is connected to the display assembly, wherein the holographic module may provide visual impression data to the illumination system, and/or the holographic module has a visual processor, a visual memory unit, and/or a user interface.

In an aspect at least one camera module may be connected to the display assembly, wherein the camera module receives surround view image data from the camera system, and/or the camera module has an image processor, an image memory unit, and/or a camera image display.

The present disclosure is also directed towards the use of a display assembly as described above for simultaneously capturing images and creating visual impressions in a vehicle.

Further, the present disclosure is related to a vehicle comprising one or more display assemblies as described above.

In a further aspect, a display assembly for mounting to a vehicle is provided comprising at least one camera system, configured to capture at least one field of view around the vehicle, at least one illumination system, positioned to project at least one light beam, and a first sheet, positioned to receive the at least one light beam. The at least one light beam projected by the at least one illumination system creates a visual impression on the first sheet, and the field of view of the at least one camera system and a path of the at least one light beam from the illumination system are independent of each other.

In one embodiment, the at least one illumination system may be positioned to project the at least one light beam on a first side of the first sheet.

In one embodiment, the at least one camera system may be configured to face in direction of a second side of the first sheet.

In one embodiment, the first sheet may comprise an optical material.

In one embodiment, the display assembly may comprise a housing, wherein the at least one illumination system, and the first sheet are operatively coupled to the housing.

In one embodiment, the display assembly may comprise a housing, wherein the at least one camera system, the at least one illumination system, and the first sheet are operatively coupled to the housing.

In one embodiment, the first sheet may be placed at an angle inside the housing, wherein optionally two opposite ends of the first sheet diagonally connect a top portion and a bottom portion of the housing.

In one embodiment, the display assembly further may comprise a second sheet, coupled to an opening side of the housing and providing a transparent side to the housing.

In one embodiment, the display assembly further may comprise at least one holographic module, connected to the display assembly. The at least one holographic module may provide visual impression data to the at least one illumination system. The at least one holographic module may have a visual processor, a visual memory unit, and a user interface.

In yet embodiment, the display assembly further may comprise at least one camera module, connected to the display assembly. The at least one camera module may receive surround view image data from the at least one camera system. The at least one camera module may have an image processor, an image memory unit, and a camera image display.

In one aspect, the present disclosure relates to a method for assembling a display assembly mounted to a vehicle, wherein the method comprises configuring at least one camera system to capture at least one field of view around the vehicle; positioning at least one illumination system to project at least one light beam and positioning a first sheet to receive the at least one light beam. The at least one light beam projected by the at least one illumination system may create a visual impression on the first sheet. The at least one field of view of the camera system and a path of the light beam from the illumination system may be independent of each other.

In one embodiment, the at least one illumination system may be positioned to project the light beam on a first side of the first sheet.

In one embodiment, the at least one camera system may be configured to face in direction of a second side of the first sheet.

In one embodiment, the field of view of the at least one camera system may be calibrated beyond the created visual impression on the first sheet.

In one embodiment, the method further may comprise coupling a housing with the at least one illumination system and the first sheet operatively.

In one embodiment, the method further may comprise coupling a housing with the camera system, the illumination system, and the first sheet operatively.

In one embodiment, the method further may comprise coupling a second sheet to an opening side of the housing, wherein a transparent side to the housing is provided.

In one embodiment, the method further may comprise providing visual impression data to the illumination system by at least one holographic module, wherein the holographic module is connected to the display assembly.

In one embodiment, the method further may comprise sending surround view image data from the at least one camera system to at least one camera module, wherein the at least one camera module is connected to the display assembly. The surround view image data may be processed by the at least one camera module using an image processing method and sent to a camera image display.

In a further aspect, the present disclosure relates to the use of the provided display assembly for simultaneously capturing images and creating visual impressions in a vehicle.

In a still further aspect, the present disclosure relates to a vehicle comprising at least one display assembly provided herein.

According to the present disclosure provided herein is thus a system and a method for a camera and holographic display in a vehicle. The system and method is capable of capturing and displaying a surrounding image to an intended human viewer or a driver of the vehicle using the camera system.

The present disclosure provides a system and method to have an unobstructed field of view of the camera system.

It is also another object of the present disclosure to provide a system with a camera - being e.g. part of a CMS (camera monitor system) - and with a holographic projector for displaying and/or developing holographic 3D images, for example on a simple glass without the need to depend on a switchable foil arrangement.

The present disclosure overcomes *inter alia* the issues of a high-resolution camera system and a holographic display system for a 3D logo projection working together.

The present disclosure also provides a system and method for a camera monitor system with a plurality of camera systems and holographic projectors for displaying holographic 3D images.

The elements of the system and method always work independent of each other and as required.

With the present disclosure a method is provided that provides reliable execution, scalability, and value-added services, while controlling operating effort and costs.

"At least one" according to the present disclosure means that one of the disclosed elements is present. In one embodiment, two of the disclosed elements are present, three of the disclosed elements are present, or even more. The number of elements is not particularly restricted.

The term "holographic display" or "hologram display" or "display of the hologram logo" or "display assembly" is in particular directed to an illumination system that displays a visual impression in 3D, in particular a hologram, to the outside of the display assembly and that can be seen from the outside of the display assembly, in particular the outside of the vehicle. Thus, in this case, the visual impression may not directly shown to the driver in the interior of the vehicle. It is to be understood by the skilled person that the term "display" used herein, e.g. display of the display assembly, is in particular referring to an element providing a functionality going beyond a screen and/or dashboard display only showing a 2D image recorded by the camera of the display assembly in the interior of the vehicle, optionally an element independent from and/or an element in addition to such a screen and/or dashboard display.

It should be understood that any one of the described features and/or embodiments of the disclosure may be used separately or in combination with other disclosed features and/or embodiments.

Other implementations, embodiments, processes, aspects and features of the subject matter will become more fully apparent when the following detailed description disclosing one or more embodiments of the present disclosure by way of example only is read with the accompanying experimental details. However, both the foregoing summary of the subject matter and the following detailed description of it represent one potential implementation or embodiment and are not restrictive of the present disclosure or other alternate implementations or embodiments of the subject matter.

A clear understanding of the key features of the subject matter summarized above may be had by reference to the appended drawings, which illustrate the method and system of the subject matter, although it will be understood that such drawings depict preferred embodiments of the subject matter and, therefore, are not to be considered as limiting its scope about other embodiments which the subject matter is capable of contemplating. Accordingly:
FIGURE 1a, 1b, 1c illustrates an isometric view of a camera and holographic display in a vehicle in accordance with embodiments of the present disclosure.
FIGURE 2a, 2b illustrates a close-up view of a housing of a camera and holographic display in accordance with embodiments of the present disclosure.
FIGURE 3a, 3b, 3c, 3d illustrates a schematic diagram of a housing with holographic display in accordance with embodiments of the present disclosure.
FIGURE 4 illustrates a schematic module diagram of a camera and holographic display in accordance with embodiments of the present disclosure.
FIGURE 5 illustrates an exemplary flowchart of a method of a camera and holographic display, in accordance with an embodiment of the present subject matter.

The following is a detailed description of implementations of the present disclosure depicted in the accompanying drawings. The implementations are in such detail as to clearly communicate the disclosure. However, the amount of detail offered is not intended to limit the implementations, but it is to cover all modifications, equivalents, and alternatives falling within the spirit and scope of the present disclosure. While aspects of described systems and methods for the camera and holographic display can be implemented in any number of different computing systems, environments, and/or configurations, the embodiments are described in the context of the following exemplary system(s). It is also noted that in the following "at least one" of the elements as described above are encompassed, even if not specifically mentioned.

The present disclosure provides a system having a display assembly for mounting to a vehicle. The display assembly has a camera system, configured to capture a field of view around the vehicle, an illumination system, positioned to project a light beam and a sheet, positioned to receive the light beam. The light beam projected by the illumination system creates a visual impression on the sheet and the field of view of the camera system and a path of the light beam from the illumination system are independent from each other.

The present disclosure provides a housing in the display assembly encompassing the illumination system, the camera system, and the sheet. The housing may also have a second sheet, coupled to an opening side of the housing, providing a transparent side to the housing.

The present disclosure provides a holographic module connected to the display assembly, wherein the holographic module provides visual impression data to the illumination system. The holographic module has a visual processor, a visual memory unit, and a user interface. The present disclosure provides a camera module, connected to the display assembly, wherein the camera module receives surround view image data from the camera system. The camera module has an image processor, an image memory unit, and a camera image display.

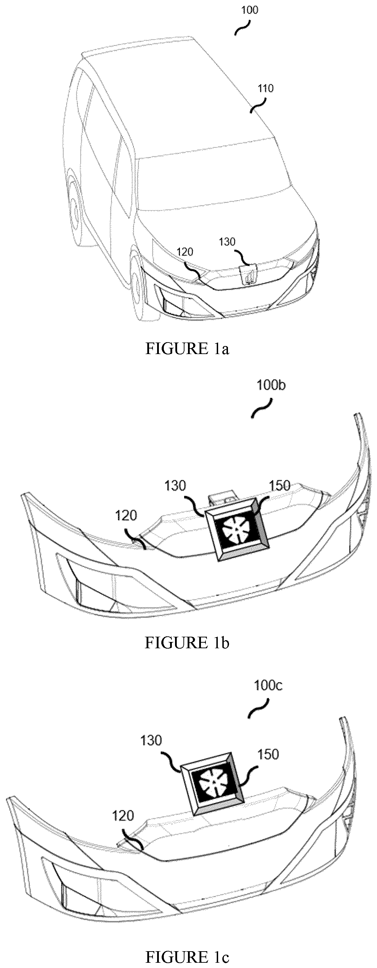

FIGURE 1a illustrates an isometric view 100 of a camera and holographic display in a vehicle in accordance with aspects of the present disclosure.

In one embodiment, a system in form of a display assembly and method for camera and holographic display is implemented in a vehicle 110, such as a car, or truck or any motor vehicle, that has a housing 130 having camera and illumination system or holographic display units installed in a front part 120 of the vehicle 110. The front part 120 is a bumper or a bonnet. The display assembly is used for various purposes as per user requirements.

In one embodiment, a system in form of a display assembly and method for camera and holographic display is implemented in a vehicle 110, such as a car, or truck or any motor vehicle, which has a housing 130 having camera and illumination systems or holographic display units installed in a rear part of the vehicle 110. The rear part is a rear bumper or a trunk cover. The display assembly is used for various purposes as per user requirements.

The camera unit in the housing 130 is configured to work with, at least a display screen of a camera monitor system (CMS). The holographic display unit in the housing 130 is configured to work with a holographic system for generating 3D images in the housing 130.

The display assembly has the housing 130 mounting side is displayed at the front part 120 of the vehicle 110. The housing 130 can be mounted at various locations on the vehicle 110, as per application requirements. The various locations, include but are not limited to the front part 120 of the vehicle 110, a rear side of the vehicle 110, any side parts of the vehicle 110, a top part of the vehicle 110, all at respective centre locations or corners. The camera and holographic units can be affixed inside the housing 130. Alternatively, in different versions, a plurality of the housings 130 can be installed at various locations on the vehicle 110. In Figures 1a to 1c the housing 130 is embedded inside the front part 120 or above the front part 120. A plurality of camera system units can be installed as per application requirements. To secure the housing 130, mounting brackets, screws, fasteners, or any other securing arrangements can be used. The housing 130 can be designed to protrude outside the vehicle body or can be designed to confirm the contour or shape of the vehicle body and reside completely in an opening within the vehicle body. Multiple designs are possible for the placement of the display assembly, a few examples are shown in figures 1b and 1c. The camera and holographic display can be implemented in any number of different designs.

FIGURE 1b illustrates an isometric view 100b of a camera and holographic display in a vehicle in accordance with embodiments of the present disclosure.

In one embodiment, a close view of a front part 120 of a vehicle 110 is shown in which the camera and holographic display is implemented. The system has a housing 130 having camera and holographic display units installed by embedding the display assembly in the front part 120 of the vehicle 110. The holographic display unit creates a visual image 150 in the display assembly.

FIGURE 1c illustrates an isometric view 100c of a camera and holographic display in a vehicle in accordance with embodiments of the present disclosure.

In one embodiment, a close view of a front part 120 of a vehicle 110 is shown in which the camera and holographic display is implemented. The system has a housing 130 having camera and holographic display units installed by placing the display assembly above the front part 120 of the vehicle 110. The holographic display unit creates a visual image 150 in the display assembly.

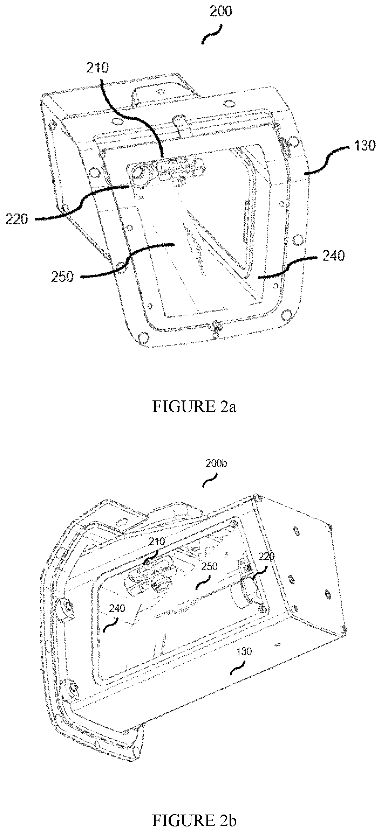

FIGURE 2a illustrates a close-up front view 200 of a housing of a camera and holographic display in accordance with embodiments of the present disclosure.

In one embodiment, a camera and holographic display units are installed in a housing 130. A display assembly has the housing 130, mounted on a vehicle 110. The housing 130 has an illumination system or a holographic projector 210, a camera system 220, a first sheet 250 and a second sheet 240.

The holographic projector 210 is connected at a top end inside the housing 130. The holographic projector 210 creates a 3D image on the first sheet 250. The holographic projector 210 throws light, of a desired shape. In case the light falls on a glass sheet, this results in reflection and refraction creating a 3D image/ video for an observer. The holographic projector 210 is mounted at a position different in height from the camera system 220.

The camera system 220 is positioned at an inner wall of the housing 130. The camera system 220 is configured to have a direct view towards a transparent side of the housing 130. In this arrangement, the holographic projector 210 and the camera system 220 work simultaneously and the 3D image on the first sheet 250 and the direct view of the camera system 220 deviate from each other.

The second sheet 240 is coupled to the housing 130 in such a way that the second sheet 240 provides the transparent side to the housing 130. The housing 130 has dark/ solid sides in all other directions and only the front side that faces towards the outside/ front of the vehicle 110 has the second sheet 240. The transparent feature of the second sheet 240 provides a view to a viewer from outside of the vehicle 110. The second sheet 240 is used so that a viewer, such as a viewer outside the vehicle 110, can see the holographic 3D image developed by the holographic projector 210 on the first sheet 250. Further, the second sheet 240 is used by the camera system 220 to capture the outside/ surround images and provide the same to a human viewer or a driver driving the vehicle 110.

The first sheet 250 is placed at an angle inside the housing 130. In this embodiment, the first sheet 250 is placed at a 45-degree angle facing towards the front side of the vehicle 110. The first sheet 250 is inclined from inside towards the holographic projector 210, so that the holographic projector 210 can create the 3D image on the first sheet 250. Further, the first sheet 250 is placed in such a way that the camera system 220 can see through the first sheet 250 and the second sheet 240 and has a field of view outside the housing 130, so to capture the surround images in still images or video modes.

FIGURE 2b illustrates a close-up side view 200b of a housing of a camera and holographic display in accordance with embodiments of the present disclosure.

In one embodiment, a camera unit and a holographic display unit are installed in a housing 130 of a display assembly. A method for assembling a display assembly includes mounting the housing 130 on a vehicle 110. The housing 130 has an illumination system or a holographic projector 210, a camera system 220, a first sheet 250 and a second sheet 240.

The method includes installing, the second sheet 240 coupled to the housing 130, providing at least one transparent side to the housing 130. Further, placing the first sheet 250 at an angle inside the housing 130, and connecting the holographic projector 210 at a top end inside the housing 130, so that the holographic projector 210 creates a visual or a 3D image on the first sheet 250.

In one embodiment, the method includes positioning the camera system 220 inside a wall of the housing 130, wherein the camera system is configured to have a direct view towards the transparent side to the housing 130, wherein the holographic projector 210 and the camera system work simultaneously.

In one embodiment, the method includes positioning the camera system 220 outside a wall of the housing 130, wherein the camera system is configured to have a direct view towards the transparent side to the housing 130, wherein the holographic projector 210 and the camera system work simultaneously.

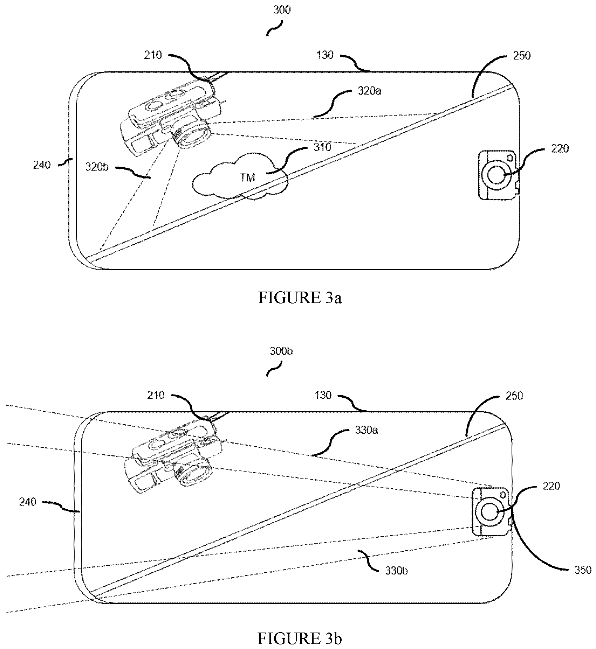

FIGURE 3a illustrates a schematic diagram 300 of a housing with a holographic display in accordance with embodiments of the present disclosure.

The present subject matter proposes a method for assembling a display assembly mounted to a vehicle 110 having an illumination system or a holographic projector 210 in a housing 130. The holographic projector 210 is a holographic visual impression projector. In one example, the holographic visual impression projector projects light beam(s) to create any of 3D holographic image, 3D image, 2D image, 3D hologram video, 3D video, 2D video, and alike. In another example, the holographic projector 210 uses a cutting-edge technology that creates captivating three-dimensional visuals that seem to exist in space without the need for special surface. It operates on the principle of light interference and coherence. The holographic 3D image projector employs a coherent light source, usually a laser, to generate beams of light waves that are in harmony with each other. These beams are divided into two: an object beam and a reference beam. The object beam is directed at the subject - an object or scene that needs to be projected in 3D. This beam interacts with the subject, and the resulting light waves are captured by a recording medium. Simultaneously, the reference beam directly hits the recording medium as well. The intersection of the reference and object beams on the recording medium leads to the formation of intricate interference patterns.

In one example, a first sheet 250 is made up of optical material or has a layer of optical material. Optical materials with reflective properties possess a remarkable ability to efficiently bounce and redirect incident light. These materials are engineered to interact with photons in a way that enables reflection, allowing them to act as mirrors or reflective surfaces in various applications. The careful selection and design of these materials are essential in achieving desired optical performance, making them indispensable in fields where precise control of light is essential. Examples of suitable materials are, but are not limited to, glass, acrylic sheets, quartz, silica, calcite, sapphire, and the like that are known for optical properties. Optical materials with both reflective and refractive properties, known as optical coatings, are essential in a myriad of optical applications. These coatings are engineered to manipulate light by selectively reflecting, transmitting, or refracting specific wavelengths.

In one example, the interference patterns hold the encoded information about the intensity and phase of the light waves that interacted with the subject. The patterns form a hologram 'TM' 310, as shown, which is like a 3D snapshot or a visual impression of the subject's light interaction in a beam area between 320a and 320b. The 320a and 320b represents a path of the light beam originating from the illumination system 210. The path of the light beam is away from a field of view of the camera system 220 that is calibrated beyond the created visual impression on the first sheet 250.

When the holographic image needs to be viewed, coherent light is projected onto the developed hologram. The hologram diffracts the light waves in a way that recreates the original wavefronts recorded during the interference pattern formation. As these wavefronts propagate, they generate a visual impression that appears to float in the air, giving a remarkable sense of depth and realism.

The holographic projector 210 can be used for various applications, creative uses such as vehicle logo projection, any entertainment or art, and even advanced user interfaces.

FIGURE 3b illustrates a schematic diagram 300b of a housing with camera view in accordance with aspects of the present disclosure.

The present subject matter illustrates a method for a display assembly mounted to a vehicle 110 having a camera system 220 in a housing 130. The camera system 220 or a camera monitor system (CMS) capturing surrounding images of the vehicle 110 involves strategically placed cameras that provide real-time visual information about the vehicle's surroundings. In the CMS, a single or a plurality of cameras are positioned at strategic locations around the vehicle 110, such as the front, rear, sides, and even inside the cabin. Each camera has a specific field of view to capture different angles and areas.

These cameras continuously capture images or video footage of the areas at which they are pointed. The captured images contain visual information about objects, people, road conditions, and other vehicles nearby. In one example, the camera system 220 has a field of view defined by 330a and 330b to capture the surround images. The field of view 330a and 330b of the camera system 220 is calibrated such that it falls outside the housing 130 passing through a first sheet 250 and a second sheet 240, so not to interfere with the visual impression created by a holographic projector 210.

The surround images captured by the camera system 220 are sent to a processing unit within the vehicle's camera monitor system. Here, sophisticated image processing algorithms analyse the surround images in real-time. Some systems might use algorithms to stitch together the individual camera views to create a comprehensive and seamless 360-degree view around the vehicle. This stitched view can be displayed on a screen inside the vehicle 110. The processed surround images or stitched view are displayed on a screen that is easily accessible to a driver of the vehicle 110. This could be a dashboard display, an infotainment screen, or even a heads-up display projected onto the windshield. Such image display screen is different to the illumination system of the display assembly disclosed herein.

The displayed images help the driver gain a better understanding of their surroundings, reducing blind spots and providing a clearer view of potential obstacles, pedestrians, other vehicles, road markings, better parking, and low-speed manoeuvring, thereby improving road safety. Many camera monitor systems include advanced features such as object detection, lane departure warnings, collision alerts, and even augmented reality overlays. These features use the processed image data to provide real-time feedback and assistance to the driver.

In one embodiment, a camera system 220 in a vehicle 110 captures images from strategically positioned camera having a field of view 330a to 330b that does not come in a path 320a and 320b of a light beam from a holographic projector 210. The camera is positioned inside a wall 350 of a housing 130. The field of view 330a to 330b of the camera system 220 is calibrated beyond a created visual impression 310 on a first sheet 250. The camera system 220 sends the captured surround images for processing the surround images using advanced image processing algorithms and displays them to a driver of the vehicle 110. It enhances the driver's awareness of their surroundings, improves safety, and aids in parking and low-speed manoeuvring.

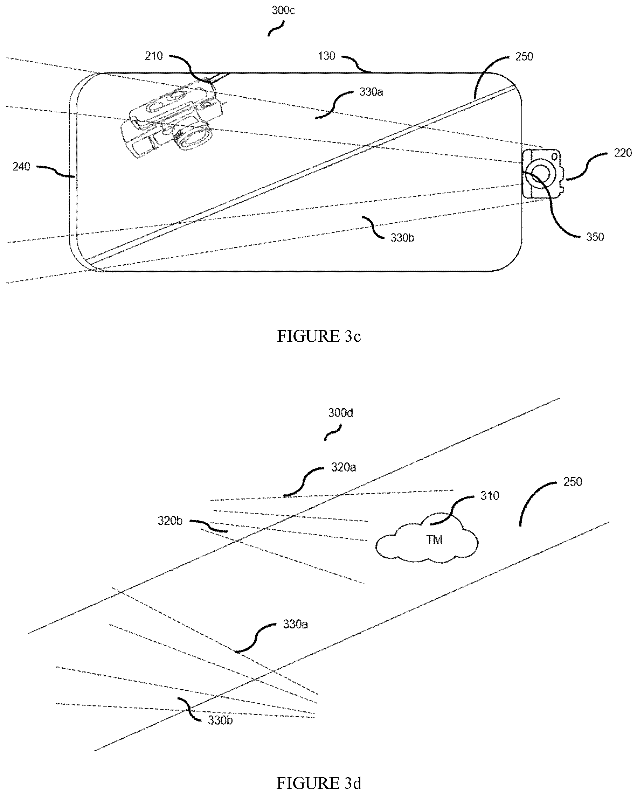

FIGURE 3c illustrates a schematic diagram 300c of a housing with camera view in accordance with embodiments of the present disclosure.

In one embodiment, a camera system 220 in a vehicle 110 captures images from a strategically positioned camera having a field of view 330a to 330b that does not come in a path 320a and 320b of a light beam from a holographic projector 210. The camera is positioned outside a wall 350 of a housing 130. The field of view 330a to 330b of the camera system 220 is calibrated beyond a created visual impression 310 on a first sheet 250. The camera system 220 sends the captured surround images for processing the surround images using advanced image processing algorithms and displays them to a driver of the vehicle 110. It enhances the driver's awareness of their surroundings, improves safety, and aids in parking and low-speed manoeuvring.

FIGURE 3d illustrates a schematic diagram 300d of a housing with holographic display and camera system in accordance with embodiments of the present disclosure.

In an example, a holographic projector 210 projects light patterns to create a visual impression 310 / hologram / 3D image / video on a first sheet 250 using a path of a light beam of the holographic projector 210, shown as 320a-320b. Further, a camera system 220 on a vehicle 110 captures images from strategically positioned camera having a field of view 330a to 330b that does not come in the path 320a-320b of the light beam of the holographic projector 210. A field of view 330a-330b of the camera system 220 is calibrated beyond the created 3D image on the first sheet 250 is depicted.

In another example, an illumination system 210 is positioned to project a light beam on a first side of the first sheet 250 and a camera system 220 is configured to face in direction of a second side of the first sheet 250.

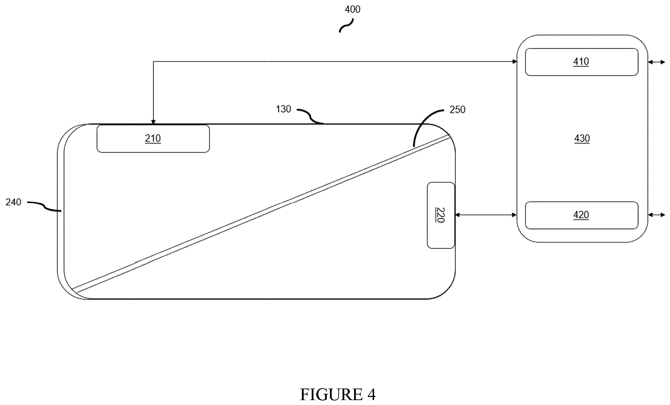

FIGURE 4 illustrates a schematic module diagram 400 of a camera and holographic display in accordance with embodiments of the present disclosure.

The present subject matter illustrates a display assembly system for camera and holographic display having a housing 130, mounted on a vehicle 110, having an illumination system or a holographic projector 210. The holographic projector 210 is connected at a top end inside the housing 130, the holographic projector 210 creates a visual impression on a first sheet 250, the first sheet 250 is placed at an angle inside the housing 130.

In one example, the holographic projector 210 is coupled to the housing 130 of the vehicle 110 and communicates with a holographic module 410. The holographic module 410 resides in an electronic control unit (ECU) 430. The holographic module 410 provides visual impression data to the holographic projector 210. The holographic projector 210 and the holographic module 410 communicate using wireless or wired mechanisms.

In one example, the holographic module 410 has a 3D image processor, a 3D image memory unit, and a 3D image user interface. The 3D image user interface can be used by a user to send hologram instructions to the holographic module 410.

In one example, the holographic module 410 has a visual impression processor, a memory unit, and a user interface. The user interface can be used by a user or an external automated system to send visual impression data and instructions to the holographic module 410.

A holographic 3D image projector uses advanced technology to create the illusion of three-dimensional objects floating in space. It does this by projecting light in a way that simulates the depth and perspective of objects. The holographic 3D image projector system is equipped with a processor and a memory. The processor handles complex calculations involved in creating and rendering 3D holographic images, while the memory stores the necessary data and instructions. Users can interact with the holographic image projector through a user interface, which might include touchscreens, voice commands, or gesture recognition. This interface allows users to feed 3D image data into the system. This data could come from various sources, such as navigation maps, entertainment content, or augmented reality applications or from an automated instruction set.

The processor uses specialized algorithms to process the 3D image data. These algorithms convert the input data into a format suitable for holographic projection. These algorithms consider the spatial properties, color, and perspective of the images to create a seamless holographic experience. The holographic 3D image projector itself comprises specialized components, such as lasers or light sources, optical elements, and spatial light modulators. These elements work together to project light beams that interact with each other in a way that creates the illusion of three-dimensional objects. The result is a vivid, dynamic holographic image that appears to float in the air.

In one example, a holographic display using specialized algorithms transforms a static logo into a mesmerizing dance of light and depth. It takes a flat image and brings it to life in three dimensions, much like a holographic video. As a viewer gaze upon it, the logo seems to leap out of the display, each element dancing gracefully in the air. The viewer can see it from various angles, revealing hidden details and creating a captivating visual spectacle. This holographic display technology blends the realms of digital and physical, offering a dynamic and enchanting way to showcase logos, videos, and images, turning them into immersive experiences that leave a lasting impression.

In one example, the holographic projector 210 creates the holographic images onto a designated display surface, i.e. the first sheet 250, within the housing 130 of the vehicle 110.

The present subject matter encompasses a display assembly system for camera and holographic display having a housing 130, mounted on a vehicle 110, and having a camera system 220. The camera system 220 is operatively coupled to the housing 130.

In one example, the camera system 220 is configured to have a direct view towards a transparent side of the housing 130. In this arrangement, the holographic projector 210 and the camera system 220 work simultaneously. A second sheet 240 coupled to the housing 130 provides the transparent side to the housing 130.

In one example, the camera system 220 is configured to have a direct view towards an opposite side of the visual impression on a first sheet 250. In this arrangement, the holographic projector 210 and the camera system 220 work simultaneously without hindering the visual impression or the field of view of the camera system.

In one example, the camera system 220 of the display assembly, communicates with a camera module 420. The camera module 420 resides in an electronic control unit (ECU) 430. The camera module 420 receives surround image including still or video image data from the camera system 220 and sends captured surround images to a driver of the vehicle 110 or any human viewer.

In one example, the camera module 420 has an image processor, an image memory unit, and a camera image display. The camera system 220 and the camera module 420 communicate using wireless or wired mechanisms.

In one example, a plurality of camera systems each equivalent to the camera system 220 can connect to the camera module 420.

A camera monitor system works in a vehicle, including its components like a processor, memory, and a display for the driver. The camera monitor system consists of multiple cameras placed around the vehicle, both inside and outside. These cameras capture real-time video footage of the surroundings. The captured image data from the cameras are sent to a central processing unit. The processor uses advanced image processing algorithms to analyze the video / image feeds. These algorithms can identify objects, recognize lane markings, detect obstacles, and more. They turn the raw image data into meaningful information. The processed information is then displayed on a screen inside the vehicle for the driver to see.

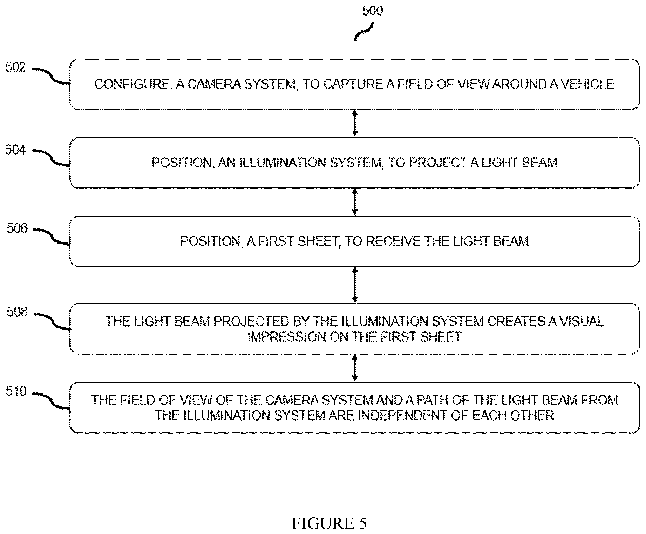

FIGURE 5 illustrates an exemplary flowchart 500 of a method of a camera and holographic display, in accordance with an embodiment of the present subject matter.

In one implementation, a method 500 for camera and holographic display is shown. The method may be described in the general context of computer executable instructions. Computer executable instructions can include routines, programs, objects, components, data structures, procedures, modules, functions, etc., that perform functions or implement abstract data types. The method may also be practiced in a distributed computing environment where functions are performed by remote processing devices that are linked through a communications network. In a distributed computing environment, computer executable instructions may be in both local and remote computer storage media, including memory storage devices. The order in which the method is described and is not intended to be construed as a limitation, and any number of the described method blocks can be combined in any order to implement the method or alternate methods. Additionally, individual blocks may be deleted from the method without departing from the spirit and scope of the disclosure described herein. Furthermore, the method may be implemented in any suitable hardware, software, firmware, or combination thereof. However, for ease of explanation, in the embodiments described below, the method may be implemented in the above-described system.

At step / block 502, a camera system 220 is configured to capture a field of view 330a,330b around a vehicle 110. A display assembly has the camera system 220. In one embodiment, a display assembly is mounted on the vehicle 110 at a front part 120 of the vehicle 110. In another embodiment, the display assembly is mounted on the vehicle 110 at a rear part of the vehicle 110.

At step / block 504, an illumination system 210 is positioned to project a light beam. In one embodiment, the illumination system 210 is a holographic projector and is used to create a visual impression.

At step / block 506, a first sheet 250 is placed to receive the light beam from the illumination system 210. In one embodiment, the first sheet 250 is placed diagonally at an angle inside the display assembly. In one embodiment, the sheet 250 is placed at a 45-degree angle in the display assembly.

At step / block 508, the light beam projected by the illumination system 210 creates a visual impression 310 on the first sheet 250. In one embodiment, the visual impression 310 is a 3D image.

At step / block 510, the field of view 330a,330b of the camera system 220 and a path 320a,320b of the light beam from the illumination system 210 are independent of each other. In one embodiment, a field of view 330a,330b of the camera system 220 is calibrated beyond the created visual image 310 on the sheet 250. The visual image on the sheet 250 and the field of view 330a,330b of the camera system 220 deviates from each other.

In one embodiment, a second camera system is positioned at an outer wall of the display assembly.

In one embodiment, 3D image data is provided to the illumination system 210 by a holographic module 410 of an electronic control unit (ECU) 430 outside a housing 130. The holographic module 410 has a 3D image processor, a 3D image memory unit, and a 3D image user interface.

In one embodiment, surround view image data is received from the camera system 220 to a camera module 420 of an electronic control unit (ECU) 430 outside the housing 130. The camera module 420 has a camera image processor, a camera image memory unit, and a camera image display.

Thus, the method 500 helps in simultaneous camera and holographic display.

Although implementations of system and method for camera and holographic display have been described in language specific to system features and/or methods, it is to be understood that the appended claims are not necessarily limited to the specific system features or methods described. Rather, the specific system features and methods are disclosed as examples of implementations for providing a camera and holographic display.

### Reference Signs

- 100, 100b: - isometric view
- 110: - vehicle
- 120: - front part
- 130: - housing
- 150: - visual image
- 200: - close-up front view of housing
- 200b: - close-up side view of housing
- 210: - holographic projector
- 220: - camera system
- 240: - second sheet
- 250: - first sheet
- 300, 300b, 300c, 300d: - schematic diagram
- 310: - visual impression
- 320a, 320b: - path of light beam
- 330a, 330b: - field of view
- 350: - wall
- 400: - schematic module diagram
- 410: - holographic module
- 420: - camera module
- 430: - electronic control unit (ECU)
- 500: - flowchart
- 502, 504, 506, 508, 510: - steps, blocks

## Claims

1. A display assembly for mounting to a vehicle, comprising:
• at least one housing (130), at least partly accommodating
o at least one camera system (220), configured to capture at least one field of view (330a, 330b) around the vehicle,
o at least one illumination system (210), adapted to project at least one light beam (320a, 320b) along at least one light path, and
o at least one first sheet (250), positioned within the light path;
wherein
• the light beam creates a visual impression on the first sheet (250),
• the camera system (220) is adapted to capture the field of view at least partly through the first sheet (250), and
• the first sheet (250) is adapted to display the visual impression in 3D, in particular comprising a hologram, wherein the visual impression is generated due to diffraction of the light beam on the first sheet (250).

2. The display assembly as claimed in claim 1, wherein
• the illumination system (210) is adapted to project the light beam (320a 320b) on a first side of the first sheet (250), and/or
• the camera system (220) is configured to face in direction of a second side of the first sheet (250), and/or
• the illumination system (210), the camera system (220), and the first sheet (250) are operatively coupled to the housing (130).

3. The display assembly as claimed in claim 1 or 2, wherein
• the first sheet (250) is adapted to display the visual impression outside the vehicle, and/or
• the first sheet (250) comprises at least one optical material, and/or
• the first sheet (250) is placed at an angle inside the housing (130), wherein preferably two opposite ends of the first sheet (250) diagonally connect a top portion and a bottom portion of the housing (130).

4. The display assembly according to any one of the preceding claims, wherein
the field of view (330a, 330b) and the light beam (320a, 320b) at least partly do not overlap each other within the housing of the assembly and/or are independently controlled from each other.

5. The display assembly according to any one of the preceding claims, wherein
the field of view (330a,330b) of the camera system (220) is calibrated beyond the created visual impression on the first sheet (250).

6. The display assembly according to any one of the preceding claims, wherein
the first sheet (250) is adapted to hide at least partly the camera system (220) from a view from the outside of the display assembly, in particular from the outside of the vehicle.

7. The display assembly according to any one of the preceding claims, further comprising:
at least one second sheet (240), coupled to an opening side of the housing (130) and providing a transparent side to the housing (130),
wherein optionally at least partly the displayed visual impression and/or field of view (330a, 330b) extend through the second sheet (240).

8. The display assembly according to any one of the preceding claims, further comprising at least one holographic module (410) connected to the display assembly,
wherein
• the holographic module (410) provides visual impression data to the illumination system (210), and/or
• the holographic module (410) has a visual processor, a visual memory unit, and/or a user interface.

9. The display assembly according to any one of the preceding claims, wherein
at least one camera module (420) is connected to the display assembly,
wherein
• the camera module (420) receives surround view image data from the camera system (220), and/or
• the camera module (420) has an image processor, an image memory unit, and/or a camera image display.

10. Use of a display assembly as claimed in any one of the preceding claims for simultaneously capturing images and creating visual impressions in a vehicle.

11. A vehicle comprising one or more display assemblies as claimed in any one of claims 1 to 9.
